# EUROPÄISCHE PATENTSCHRIFT

(11) **EP 3 103 168 B1**
(45) Veröffentlichungstag und Bekanntmachung des Hinweises auf die Patenterteilung: **18.09.2019**
(21) Anmeldenummer: 15705900.7
(22) Anmeldetag: 28.01.2015
(51) Int. Cl.: H02B 1/01

(54) **RAHMENPROFIL EINES RAHMENGESTELLS FÜR EINEN SCHALT- ODER VERTEILERSCHRANK**
PROFILE OF A FRAMEWORK FOR AN ELECTRICAL OR DISTRIBUTION CABINET
PROFILÉ DE CADRE POUR UNE ARMOIRE ÉLECTRIQUE OU DE DISTRIBUTION

(30) Priorität: 05.02.2014 DE 102014101404
(43) Veröffentlichungstag der Anmeldung: 14.12.2016
(73) Patentinhaber: RITTAL GmbH & Co. KG, 35745 Herborn (DE)
(72) Erfinder: REUTER, Wolfgang, 56479 Liebenscheid (DE); BRÜCK, Daniel, 35394 Giessen (DE); SCHINDLER, Timo, 35649 Bischoffen (DE); PAUL, Hartmut, 35767 Breitscheid (DE); HOLIGHAUS, Heiko, 35713 Eschenburg (DE)
(74) Vertreter: Angerhausen, Christoph
(86) Internationale Anmeldenummer: PCT/DE2015/100034
(87) Internationale Veröffentlichungsnummer: WO 2015/117597

(56) Entgegenhaltungen:
- EP-A2- 2 136 446
- US-A1- 2001 050 516
- US-A1- 2002 121 387
- US-B1- 6 231 142

## Beschreibung

Die Erfindung betrifft ein Rahmenprofil eines Rahmengestells für einen Schalt- oder Verteilerschrank, das ein Vertikal- und/oder Horizontalprofil des Rahmengestells bildet, bestehend aus einer Vielzahl von Profilabschnitten, die ineinander übergehen, um ein geschlossenes Hohlprofil zu bilden, mit den weiteren Merkmalen:
- zwei erste Profilabschnitte weisen eine Anzahl von Befestigungsaufnahmen auf, wobei jeweils eine erste Oberfläche der Profilabschnitte eine äußere Montageebene festlegt;
- durch zwei zweite Profilabschnitte ist eine Dichtebene zur Abdichtung des Innenbereichs des Rahmengestells definiert;
- die äußeren Montageebenen sind von der Dichtebene zum Innenbereich des Rahmengestells hin versetzt; und
- die Befestigungsaufnahmen der ersten Profilabschnitte weisen vom Innenbereich des Rahmengestells weg,
wobei die zwei ersten Profilabschnitte und zwei dritte Profilabschnitte einen Hohlkammerabschnitt mit quadratischem Querschnitt umschließen und die zwei ersten Profilabschnitte in die beiden zweiten Profilabschnitte, die senkrecht zu den ersten Profilabschnitten verlaufen, übergehen, und wobei die beiden zweiten Profilabschnitte über einen vierten Profilabschnitt miteinander verbunden sind.

Ein derartiges Rahmenprofil ist aus der US 2001/0050516 A1 bekannt. Ein ähnliches Rahmenprofil beschreibt auch die US 6,231,142 B1. Die aus der DE 195 36 950 C1 bekannten Rahmenprofile für ein Rahmengestell eines Schaltschrankes angegeben sind spiegelbildlich zur Querschnittsdiagonalen ausgebildet und weisen zwei senkrecht zu den Außenseiten des Rahmengestelles ausrichtbare Profilseiten auf. Diese sind mit Befestigungsaufnahmen versehen und über einen Verbindungsabschnitt miteinander verbunden. Insgesamt ergeben sich für die dargestellten offenen und geschlossenen Profile vier Montageebenen, die alle vom Innenbereich des aus den Rahmenprofilen aufgebauten Rahmengestells her zugänglich sind.

Der Einbau einer Montageplatte in den Innenraum eines Schaltschrankes erfordert oftmals einen beträchtlichen Montageaufwand. So sind bei einem in der EP 1 587 191 B1 beschriebenen Schaltschrankaufbau mit einem Rahmengestell aus horizontalen und vertikalen Rahmenprofilen im Bodenbereich des Rahmengestelles Führungsschienen am Rahmengestell angebracht, auf denen die Montageplatte aufgesetzt und in Richtung der Rückwand verschoben werden kann. Hat die auf den Führungsschienen geführte Unterseite der Montageplatte die Endstellung erreicht, dann wird sie aus der schrägen Einführstellung vertikal ausgerichtet und mit besonderen Halteelementen im oberen Bereich des Rahmengestelles, vorzugsweise an den oberen horizontalen Rahmenprofilen, befestigt. Für die Einführung der Montageplatte ist die Unterseite der Montageplatte mit Führungselementen versehen, die auch zur Festlegung der Montageplatte auf den Führungsschienen verwendet werden kann. Neben den Führungsschienen, den Führungselementen und den Halteelementen kommt eine schwierig durchzuführende Montagearbeit hinzu, da die aufgerichteten Montageelemente die Halteelemente schwer zugänglich machen. Dazu schlägt die EP 1 587 191 B1 vor, jedes der unteren Halteelemente an der Seitenwand und/oder einer anschließenden Bodenwand zu befestigen, wozu es über die Rückseite eines Befestigungsblocks an einer Innenseite der Seitenwand anliegt oder befestigt ist, während eine Unterseite des Befestigungsblocks auf der Bodenwand aufsteht oder mit dieser verbunden ist. Das obere Halteelement ist rückseitig mit einem Flansch versehen, der an der Innenseite der Seitenwand anliegt, wobei sich der Anlageblock an den Flansch anschließt und mit seiner vorderseitigen Anlagefläche einen vorgegebenen Abstand bestimmt.

Die DE 33 00 066 A1 stellt sich die Aufgabe, einen Schaltschrank so auszubilden, dass die Montageplatte bei möglichst geringem Platzverlust der für die Schaltsysteme nutzbaren Fläche leicht und einfach am Schaltschrank montiert werden kann. Dazu wird die Montageplatte so ausgelegt, dass sie die Rückwand des Schrankgehäuses bildet, so dass die fertig bestückte und verdrahtete, somit schwere Montageplatte lediglich als Rückwand an den Schaltschrank angesetzt zu werden braucht. Diese Vorgehensweise hat allerdings den Nachteil, dass eine staub- und feuchtigkeitsdichte Abtrennung des Schaltschrankes gegenüber seiner Umgebung nicht mehr möglich ist.

Es ist die Aufgabe der Erfindung, ein Rahmenprofil der eingangs beschriebenen Gattung so weiterzubilden, dass sich erweiterte Montagemöglichkeiten ergeben, wobei jedoch nach wie vor sichergestellt werden kann, dass eine gute Abdichtung gegen Staub und Feuchtigkeit aus der Umgebung des Schaltschrankes erfolgen kann.

Diese Aufgabe wird durch ein Rahmenprofil nach Anspruch 1 gelöst. Vorteilhafte Ausgestaltungen sind Gegenstand der rückbezogenen Unteransprüche. Eine Montageplatte zur Verwendung mit wenigstens einem Rahmenprofil gemäß der vorliegenden Erfindung ist in Anspruch 6 angegeben.

Erfindungsgemäß sind die beiden zweiten Profilabschnitte jeweils über eine Faltung auf sich zurückgefaltet, sodass durch einen freien Endbereich der zweiten Profilabschnitte die Dichtebene senkrecht zu der Faltung des zweiten Profilabschnitts definiert ist.

Je nach Profilart bedeutet dies, dass diese Befestigungsaufnahmen grundsätzlich nur von au-ßerhalb des Rahmengestells her zugänglich sind, weil sie beispielsweise in einer beim Rahmengestell außen liegenden Profilseite eines Hohlprofils angebracht sind, oder sie sind, beispielsweise bei einem flanschartigen Profilabschnitt, als Durchgangsöffnungen ausgebildet, die somit zwar von außen und vom Innenbereich her zugänglich sind, aber im Sinne der Erfindung auch vom Innenbereich des Rahmengestells wegweisen, weil die Montagemöglichkeit von außen besteht.

Die Erfindung stellt einen von außerhalb des Rahmengestells zugänglichen, gegebenenfalls sogar umlaufenden Montagerahmen in einer Montageebene zur Verfügung, die zu einer Dichtebene nach innen versetzt ist und somit innerhalb des Dichtbereiches des Schaltschrankes liegt, so dass die Voraussetzungen geschaffen sind, zumindest einen Teil der Komponenten für den Innenausbau einfacher als bisher zu montieren, wobei weiterhin allen geforderten Schutzarten Rechnung getragen werden kann. Der Montagerahmen kann auf übliche Weise mit einer Systemlochung versehen sein und bietet somit vielfältige Anbaumöglichkeiten von außen her, wobei sogar daran gedacht werden kann, eine bestückte und somit sehr schwere Montageplatte stationär zu halten und das Rahmengestell auf diese zu in eine Montageposition zu bewegen.

Das erfindungsgemäße Konzept ermöglicht vielfältige Montagemöglichkeiten, es kann nach einer Variante vorgesehen sein, dass die Befestigungsaufnahmen an demselben Profilabschnitt vorgesehen sind, der auch die Dichtebene definiert. Vorzugsweise ist aber der zweite Profilabschnitt, der die Dichtebene zur Abdichtung des Innenbereichs des Rahmengestells definiert, von dem ersten Profilabschnitt unterschiedlich.

Weiter bevorzugt kann die erste Montageebene parallel zur Dichtebene verlaufen, wenn auch davon abweichende Lagebeziehungen zwischen Montageebene und Dichtebene denkbar sind.

Erweiterte Montagemöglichkeiten ergeben sich dadurch, dass ein dritter Profilabschnitt eine Anzahl von Befestigungsaufnahmen aufweist, die zum Innenbereich des Rahmengestells weisen, wobei durch die Befestigungsaufnahmen eine zweite Montageebene definiert ist. Damit wird weiterhin gewährleistet, dass beispielsweise eine Montageplatte sowohl von außen als auch von innen montiert werden kann.

Vorzugsweise verläuft die zweite Montageebene parallel zur ersten Montageebene.

Eine Montageplatte zur Verwendung mit wenigstens einem Rahmenprofil gemäß der vorliegenden Erfindung, die eine im Wesentlichen rechteckige Grundplatte umfasst, weist an wenigstens einer ihrer Seiten eine Abkantung auf, die sich in einer parallel zur Grundplatte verlaufenden Umkantung zur Anlage an die erste Montageebene fortsetzt. Damit kann die Montageplatte direkt in die Systemlochung der Montageebene verschraubt werden. Positionier- und Fixierhilfen können dabei zum Einsatz kommen.

Im Folgenden soll die Erfindung lediglich beispielhaft anhand der beigefügten Zeichnung näher erläutert werden. Die Darstellungen in den Figuren sind dabei nicht notwendigerweise maßstabsgerecht. Es zeigt:
- Fig. 1: eine Schnittdarstellung einer ersten Ausführungsform eines Rahmenprofils gemäß der vorliegenden Erfindung;
- Fig. 2: eine Draufsicht auf das Rahmenprofil der Fig. 1 mit angebautem Verschluss;
- Fig. 3: eine perspektivische Darstellung eines Eckbereiches eines Rahmengestells mit einem vertikalen Rahmenprofil nach Fig. 1 und daran anscharnierter Teilmontageplatte;
- Fig. 4: eine Schnittdarstellung mit zwei Rahmenprofilen gemäß Fig. 1;
- Fig. 5: eine perspektivische Ansicht eines Rahmenprofils gemäß Fig. 1 mit angesetztem Montage-Chassis;
- Fig. 6: eine perspektivische Darstellung eines Eckbereiches eines Rahmengestells mit einem vertikalen Rahmenprofil nach Fig. 1 und daran angebrachten Montage-Chassis und Montageschienen;
- Fig. 7: eine Schnittdarstellung, aus der das Anbringen von Flachteilen zum staub- und feuchtigkeitsdichten Abschotten des Innenraums eines Rahmengestells hervorgeht;
- Fig. 8: eine Schnittdarstellung einer Ausführungsform eines Rahmenprofils, das nicht Gegenstand der vorliegenden Erfindung ist;
- Fig. 9: eine perspektivische Ansicht des Rahmenprofils nach Fig. 8;
- Fig. 10: eine Schnittdarstellung einer Ausführungsform eines Rahmenprofils, das nicht Gegenstand der vorliegenden Erfindung ist;
- Fig. 11: eine Schnittdarstellung einer Ausführungsform eines Rahmenprofils, das nicht Gegenstand der vorliegenden Erfindung ist;
- Fig. 12: eine Schnittdarstellung einer Ausführungsform eines Rahmenprofils, das nicht Gegenstand der vorliegenden Erfindung ist;
- Fig. 13: eine schematische Darstellung diverser Montageebenen, die mit dem Rahmenprofil gemäß Fig. 10 realisiert werden können;
- Fig. 14: eine Schnittdarstellung einer Ausführungsform eines Horizontalprofils gemäß der vorliegenden Erfindung für den Bodenbereich eines Rahmengestells;
- Fig. 15: die Baulage des Horizontalprofils gemäß Fig. 14 für den Einbau im Deckenbereich;
- Fig. 16: eine Teildarstellung eines Rahmengestells, das aus Horizontalprofilen gemäß Fig. 14 und Vertikalprofilen gemäß den Fig. 1 und 2 aufgebaut ist;
- Fig. 17: einen Eckbereich eines Rahmengestells, mit einem Haltestück zur Montagehilfe einer Montageplatte;
- Fig. 18: eine Veranschaulichung des Einbaus einer Montageplatte mit Hilfe des Haltestückes aus Fig. 17; und
- Fig. 19: den oberen Eckbereich eines Rahmengestells mit einem Federclip zur Vorfixierung einer Montageplatte.

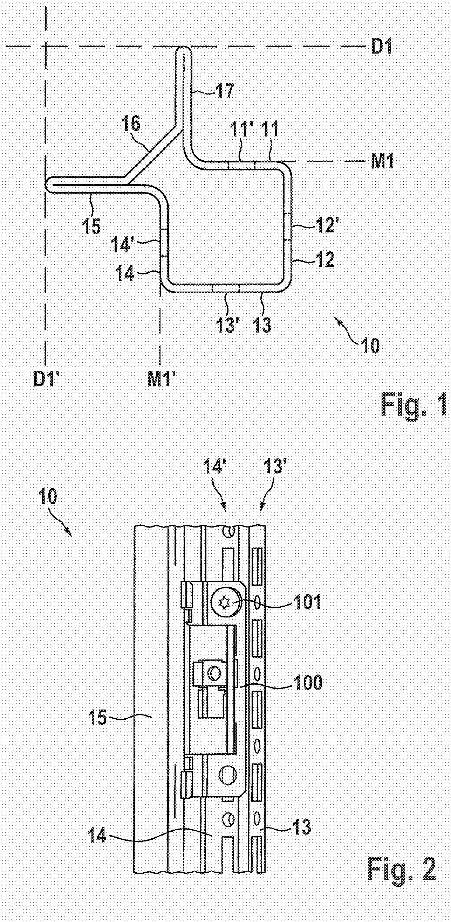

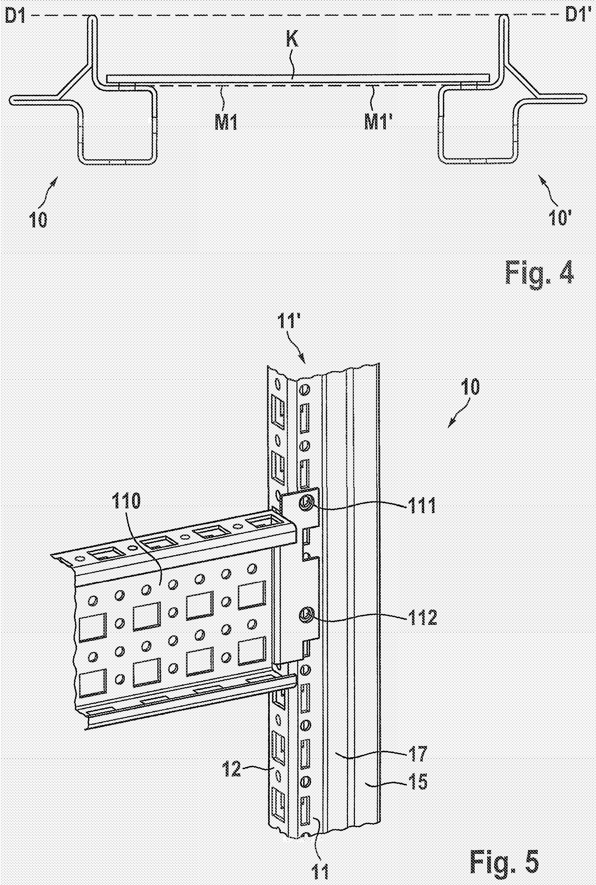

Fig. 1 zeigt eine Schnittdarstellung einer ersten Ausführungsform eines Rahmenprofils 10 gemäß der vorliegenden Erfindung, das in einem Rahmengestell für einen Schalt- oder Verteilerschrank zum Einsatz kommt. Das Rahmenprofil 10 kann ein Vertikal- und/oder Horizontalprofil des Rahmengestells bilden und besteht aus einer Vielzahl von Profilabschnitten 11, 12, 13, 14, 15, 16, 17, die ineinander übergehen, um ein geschlossenes Hohlprofil zu bilden. Die Profilabschnitte 11, 12, 13, 14 umschließen dabei im Wesentlichen einen Hohlkammerabschnitt mit quadratischem Querschnitt, wobei die Profilabschnitte 11 und 14 in senkrecht zu diesen verlaufende Profilabschnitte 17 und 15 übergehen, die auf sich zurückgefaltet sind und andererseits über den Profilabschnitt 16 miteinander verbunden sind. Die freien Endbereiche der Profilabschnitte 15 und 17 bilden dabei äußere Grenzen des Rahmengestells, das aus Rahmenprofilen 10 aufgebaut wird, und definieren somit jeweils eine Dichtebene D1 bzw. D1', die bei der dargestellten Ausführungsform so gezeigt sind, dass sie senkrecht zu der Faltung des jeweiligen Profilabschnittes 15 bzw. 17 verlaufen. Dieser senkrechte Verlauf der jeweiligen Dichtebene D1, D1' ist nicht unbedingt erforderlich, wird aber für die meisten Bausituationen bei einem Rahmengestell zweckmäßig sein. Die Dichtebenen D1, D1' bilden mit geeigneten Dichtungen und Flachteilen eine Schnittstelle zum Außenbereich des Rahmengestells, wie später noch im Zusammenhang mit Fig. 5 erläutert wird. Bei der in Fig. 1 angegebenen Anordnung sind die die Hohlkammer umschließenden Profilabschnitte 11, 12, 13, 14 jeweils mit Befestigungsaufnahmen 11', 12', 13', 14' versehen. Die Befestigungsaufnahmen 11', 12', 13', 14' können, wie es auf dem Gebiet bekannt ist, Systemlochungen in unterschiedlichster Ausgestaltung sein. Durch zur Dichtebene D1 weisende Oberfläche des Profilabschnitts 11 wird eine Montageebene M1 definiert, die, so lange keine Flachteile bzw. Seitenwände montiert sind, von der Außenseite des Rahmengestells her zugänglich ist. Somit können diverse Komponenten einfach verbaut werden, die sich nichtsdestotrotz im Dichtbereich des Schaltschrankes befinden. In ähnlicher Weise definiert die zur Dichtebene D1' weisende Oberfläche des Profilabschnitts 14 eine Montageebene M1', die ebenfalls, wie oben beschrieben, von außen zugänglich ist und die Montage von Komponenten im Dichtbereich des später fertiggestellten Schaltschrankes erlauben. Bei der dargestellten Ausführungsform sind die Montageebenen M1, M1' als parallel zu den Dichtebenen D1, D1' liegend beschrieben, obwohl gemäß der Erfindung auch andere Lageanordnungen möglich sein können. Die Montage vom Innenbereich des Rahmengestells her bleibt weiterhin durch die an den Profilabschnitten 12 und 13 vorgesehenen Befestigungsaufnahmen 12' bzw. 13' möglich.

Fig. 2 zeigt als Beispiel, wie ein Verschluss 100 an einem Rahmenprofil 10 gemäß Fig. 1 zu befestigen ist. Der Verschluss 100 ist ein Standardbauteil, das mit einem Rahmenprofil verschraubt werden kann, in Fig. 2 dargestellt ist lediglich eine einzige Schraube 101, die bereits in eine Lochung der Befestigungsaufnahmen 14' geschraubt worden ist. Der Verschluss 100 liegt im Winkelbereich zwischen den Profilabschnitten 14 und 15 und somit innerhalb des Dichtbereichs des Rahmenprofils 10. Unberührt von der Montage des Verschlusses 100 bleiben die Optionen, beispielsweise in den Befestigungsaufnahmen 13' des Profilabschnitts 13 weitere Komponenten zu fixieren.

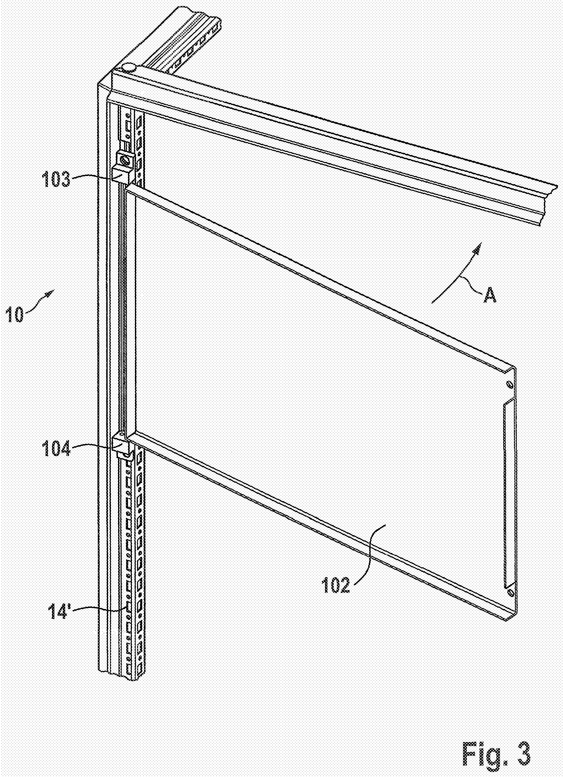

Fig. 3 zeigt eine perspektivische Darstellung eines Eckbereiches eines Rahmengestells mit einem vertikalen Rahmenprofil 10 nach Fig. 1 und als ein weiteres Beispiel für die Montage von außen her das Anbringen einer Teilmontageplatte 102 an dem vertikalen Rahmenprofil 10. Dazu sind in den Befestigungsaufnahmen 14' der Montageebene M1' (Fig. 1) zwei Scharniere 103, 104 beabstandet voneinander angebracht, die die Teilmontageplatte 102 drehbeweglich zwischen sich halten. Wenn die Teilmontageplatte 102 in Richtung des Pfeiles A eingeschwenkt ist, befindet sie sich vollständig im Dichtbereich des Rahmengestells hinter der Dichtebene D1' (Fig. 1).

In Fig. 4 sind zwei Rahmenprofile 10, 10' gemäß Fig. 1 so angeordnet, dass ihre Dichtebenen D1, D1' zusammenfallen. Bei identischen Rahmenprofilen 10, 10' stimmen damit auch die Montageebenen M1, M1' überein, so dass die entsprechenden Profilabschnitte zum Verbauen von Komponenten genutzt werden können, wie es durch die schematisch dargestellte Komponente K angedeutet ist.

Dies ist in Fig. 5 am Beispiel eines Montage-Chassis 110 näher veranschaulicht. Ein Rahmenprofil 10 gemäß Fig. 1 ist als vertikales Rahmenprofil so angeordnet, dass die Profilabschnitte 15, 17 in Betrachtungsrichtung nach rechts weisen, so dass die Befestigungsaufnahmen 11', die die nach außen weisende Montageebene M1 (Fig. 1) definieren, von vorn am Profilabschnitt 11 zu sehen sind. Das Montage-Chassis 110 wird zunächst mit in seinen Kantenbereichen vorgesehenen Fixierhaken (in der Figur nicht sichtbar) in geeignete der Befestigungsaufnahmen 11' des Profilabschnitts 11 eingehängt (entsprechendes gilt für ein benachbartes Rahmenprofil, das aber in der Figur nicht sichtbar ist). Lochungen 111, 112 im Kantenbereich des Montage-Chassis 110 sind dann mit Öffnungen der Systemlochung der Befestigungsaufnahmen 11' am Profilabschnitt 11 in Deckung gebracht. Das Montage-Chassis 110 kann nun am Rahmenprofil 10 beispielsweise durch Verschrauben gesichert werden, und zwar bequem von außen, ohne dass bei der Montage der Innenbereich des Rahmengestells betreten werden müsste. Das Montage-Chassis 110 befindet sich bei entsprechender Dimensionierung vollständig im Dichtbereich des Schaltschrankes, also von außen gesehen hinter der gemeinsamen Dichtebene D1, D1' (Fig. 4).

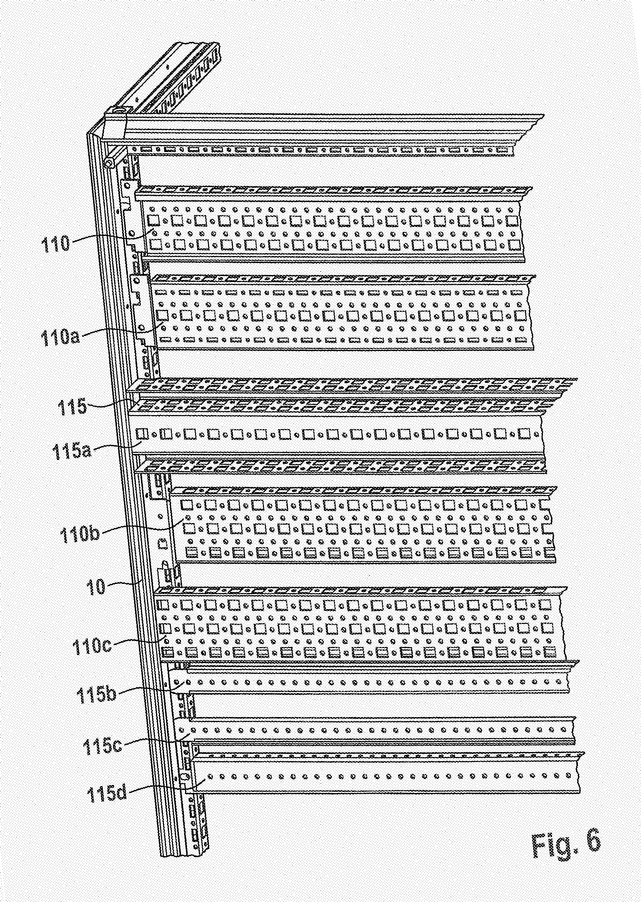

Fig. 6 zeigt eine perspektivische Darstellung eines Eckbereiches eines Rahmengestells mit einem vertikalen Rahmenprofil 10 nach Fig. 1, an dem eine Vielzahl von Montage-Chassis 110, 110a, 110b, 110c in der im Zusammenhang mit Fig. 5 beschriebenen Weise angebracht ist, ebenso wie eine Vielzahl von Montageschienen 115, 115a, 115b, 115c, 115d, die am Rahmenprofil 10 (bzw. an benachbarten Rahmenprofilen) gesichert sind, so dass vielfältige Montagemöglichkeiten, auch Nach- und Umrüstvorgänge, von außen her vorgenommen werden können.

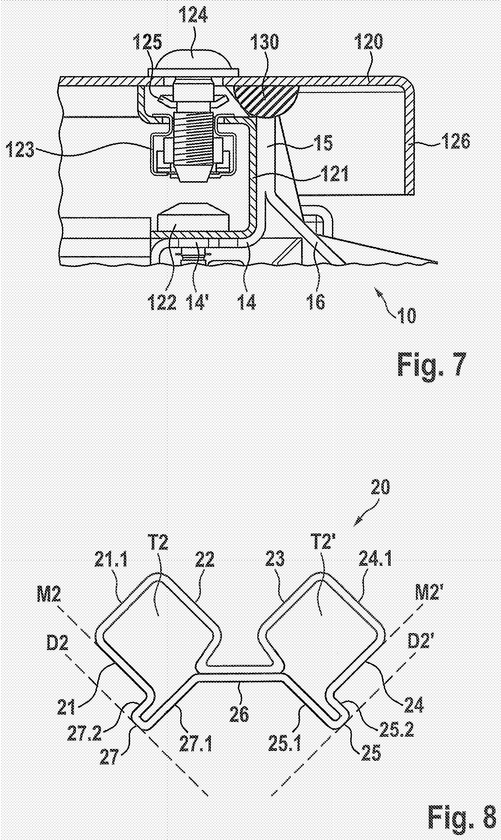

Fig. 7 zeigt, wie der Dichtbereich eines Rahmengestells mit Hilfe eines Flachteils 120, beispielsweise einer Seitenwand, verschlossen wird. Auf dem Profilabschnitt 15 des Rahmenprofils 10, das in der Fig. 7 nur teilweise erkennbar ist, sitzt eine Dichtung 130. Eine derartige Dichtung ist gegebenenfalls an einem entsprechenden Profilabschnitt eines benachbarten Rahmenprofils, in der Fig. 7 nicht dargestellt, vorgesehen. Das Flachteil 120 wird nun mit dem Rahmenprofil 10 verschraubt, wobei ein Hilfsbügel 121 verwendet wird, dessen Kontur sich an die Kontur der Profilabschnitte 14 und 15 des Rahmenprofils 10 anschmiegt und der sich dann weiter parallel zum Profilabschnitt 14 erstreckt. Der Hilfsbügel 121 ist an der Befestigungsaufhahme 14' des Profilabschnittes 14 mit Hilfe einer Schraube 122 verschraubt. In den Hilfsbügel 121 ist in den Abschnitt parallel zum Profilabschnitt 14 eine Käfigmutter 123 eingelassen, die eine Befestigungsschraube 124 für das Flachteil 120 aufnimmt. Die Befestigungsschraube 124 weist eine Anzahl Rastnasen 125 auf, so dass, wenn die Schraube 124 einmal durch eine in dem Flachteil 120 vorgesehene Öffnung geführt ist, die Schraube 124 verliersicher am Flachteil 120 gehalten wird, sobald die Rastnasen 125 die Öffnung durchquert haben. Das Flachteil 120 wird nun auf die Dichtung 130 gesetzt, so dass die Öffnung für die Schraube 124 mit der Käfigmutter 123 zur Deckung kommt. Durch Anziehen der Schraube 124 ergibt sich ein dichter Sitz des Flachteils 120 auf der Dichtung 130, so dass dem Eindringen von Staub und Feuchtigkeit vorgebeugt wird. Das Flachteil 120 kann außerhalb des Dichtbereiches, also im Bereich des Profilabschnittes 16, der die Profilabschnitte 15 und 17 (Fig. 1) verbindet, eine Abkantung 126 aufweisen.

Fig. 8 zeigt eine Schnittansicht einer weiteren Ausführungsform eines Rahmenprofils 20. Dieses Rahmenprofil 20 ist als Doppelkammerprofil ausgebildet, wobei die Teilkammern T2, T2' über einen als Verbindungssteg ausgestalteten Profilabschnitt 26 miteinander verbunden sind. Dabei bilden die Teilkammern T2, T2' zwischen sich, angrenzend an den Profilabschnitt 26, einen schwalbenschwanzartigen Hinterschnitt. An den Profilabschnitt 26 schließen sich auf jeder Seite unter einem Winkel von etwa 135° Profilabschnitte 25.1 und 27.1 an, die in flächige Profilabschnitte 25 und 27 übergehen, welche bei dem Rahmenprofil 20 jeweilige Dichtebenen D2', D2 definieren. Senkrecht an die flächigen Profilabschnitte 25, 27 schließen sich Profilabschnitte 25.2 und 27.2 an, die in wiederum senkrecht dazu verlaufende Profilabschnitte 24 und 21 übergehen, durch deren Oberflächen (die Befestigungsaufnahmen sind nicht gezeigt) Montageebenen M2', M2 definiert sind, die wiederum von außen zugänglich sind, aber im Dichtbereich eines aus derartigen Rahmenprofilen 20 aufgebauten Rahmengestells liegen. Weitere Befestigungsaufnahmen können an den die Teilkammern T2, T2' umschließenden Profilabschnitten 21.1, 22 und 23, 24.1 vorgesehen sein.

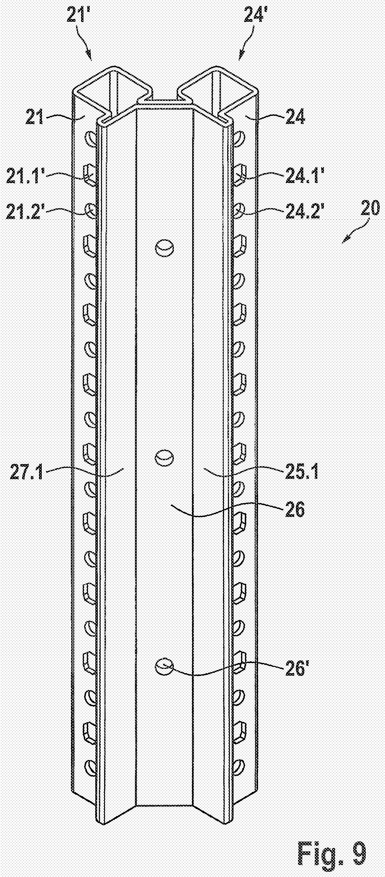

Fig. 9 zeigt das Rahmenprofil 20 der Fig. 8 in einer Draufsicht auf die Profilabschnitte 25.1 und 27.1 mit dem sie verbindenden Profilabschnitt 26, der bei dieser Ausführungsform eine Anzahl vertikal beabstandeter Lochungen 26' aufweist. Erkennbar sind außerdem die Befestigungsaufnahmen 21' und 24' der Profilabschnitte 21 und 24, die bei der dargestellten Ausführungsform als abwechselnde Lochungen mit unterschiedlichen Durchmessern 21.1', 21.2' bzw. 24.1', 24.2' ausgebildet sind.

Fig. 9 zeigt eine Schnittansicht einer dritten Ausführungsform eines Rahmenprofils 30. Ähnlich wie beim Rahmenprofil 20 nach Fig. 8 sind bei diesem Hohlprofil zwei Teilkammern T3, T3' vorgesehen, die sich gegenüberstehen und durch einen als Verbindungssteg ausgebildeten Profilabschnitt 36 miteinander verbunden sind. Die Teilkammern T3, T3' stoßen dabei mir ihren Profilabschnitten 32 bzw. 33 aneinander, so dass eine dritte Teilkammer T3" gebildet wird, die für eine verbesserte Torsionssteifigkeit des Rahmenprofils 30 sorgt. Angrenzend an den Profilabschnitt 36 sind, unter einem Winkel von etwa 135° zum Profilabschnitt 36 verlaufend, Profilabschnitte 35.1 und 37.1 angeschlossen, die jeweils in flächige Profilabschnitte 35, 37 übergehen, die eine Dichtebene D3' bzw. D3 festlegen. Es schließen sich jeweils senkrecht dazu verlaufende Profilabschnitte 35.2 und 37.2 an, die in wiederum senkrecht dazu verlaufende Profilabschnitte 34 und 31 übergehen. Durch die zur jeweiligen Dichtebene D3, D3' weisenden Oberflächen (Befestigungsaufnahmen sind wiederum nicht gezeigt) dieser Profilabschnitte 34, 31 sind Montageebenen M3', M3 definiert, die bei der dargestellten Ausführungsform des Rahmenprofils 30 parallel zu den Dichtebenen D3' und D3 verlaufen. Weitere Befestigungsaufnahmen können in den Profilabschnitten 31.1, 32, die die Teilhohlkammer T3 mit begrenzen, und in den Profilabschnitten 33, 34.1, die die Teilhohlkammer T3' mit begrenzen, vorgesehen sein.

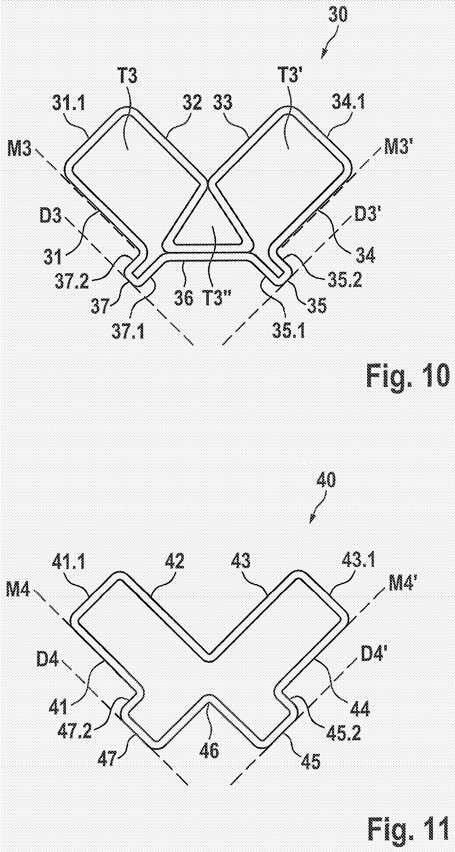

Fig. 11 zeigt eine vierte Ausführungsform eines Rahmenprofils 40, das als einkammriges Hohlprofil ausgebildet ist. Das Rahmenprofil 40 weist zwei durch einen gewinkelten Profilabschnitt 46 verbundene flächige Profilabschnitte 45 und 47 auf, die jeweils eine Dichtebene D4' bzw. D4 definieren. Unter einem Winkel von 90° und in Richtung auf das Innere des aus den Rahmenprofilen 40 aufgebauten Rahmengestells hin versetzt schließen sich Profilabschnitte 44 bzw. 41 an die Profilabschnitte 45.2 und 47.2 an, deren Oberflächen jeweils eine Montageebene M4' und M4 definieren, welche zur jeweiligen Dichtebene D4' bzw. D4 parallel liegen. Wie zuvor sind die Befestigungsaufnahmen nicht gezeigt. Das Rahmenprofil 40 weist sich an die Profilabschnitte 41, 44 jeweils unter einem rechten Winkel anschließende Profilabschnitte 41.1 und 43.1 auf, die ebenso Befestigungsaufnahmen (nicht gezeigt) aufweisen können, wobei die sich daran unter einem rechten Winkel anschließenden Profilabschnitte 42, 43, die unter einem rechten Winkel aufeinander treffen.

Alle bisher beschriebenen Rahmenprofile 10, 20, 30, 40 bestehen aus einem einheitlichen Material und sind symmetrisch zu einer Querschnittsdiagonalen ausgestaltet.

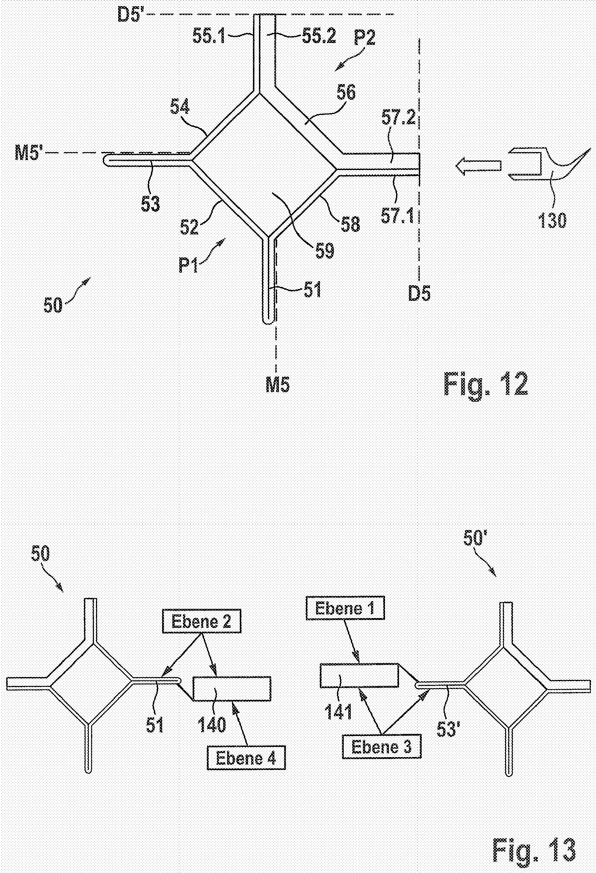

Fig. 12 zeigt eine Schnittansicht einer fünften Ausführungsform eines Rahmenprofils 50, das sich dadurch auszeichnet, dass es aus zwei Profilteilen P1, P2 aufgebaut ist. Die Profilteile P1, P2 haben unterschiedliche Eigenschaften, beispielsweise unterschiedliche mechanische Eigenschaften. So ist bei der dargestellten Ausführungsform für das Profilteil P1 eine geringere Materialdicke gewählt worden als für das Profilteil P2. Das dickwandigere Profilteil P2 besteht dabei aus zwei Profilabschnitten 55.2 und 57.2, die senkrecht zueinander angeordnet sind und durch einen Profilabschnitt 56 verbunden sind, der mit dem Profilabschnitt 55.2 bzw. 57.2 jeweils einen Winkel von etwa 135° einschließt. Das Profilteil P1 besteht aus einem Profilabschnitt 55.1, der an dem Profilabschnitt 55.2 des Profilteils P1 anliegt und andererseits über einen Profilabschnitt 54 mit einem Profilabschnitt 53 verbunden ist, der aus einer auf sich zurückgefalteten Blechlage besteht und somit doppelt so dick ist wie die Profilabschnitte 55.1 und 54. Der Profilabschnitt 53 geht unter einem Winkel von etwa 135° in einen Profilabschnitt 52 über, der dann in einem Profilabschnitt 51 mit demselben Aufbau wie dem des Profilabschnittes 53 mündet. Der Profilabschnitt 51 ist über einen Profilabschnitt 58 mit einem Profilabschnitt 57.1 verbunden, der an dem Profilabschnitt 57.2 anliegt. Durch den freien Endbereich der aneinander gefügten Profilabschnitte 55.1 und 55.2 bzw. 57.1, 57.2 sind Dichtebenen D5', D5 definiert, die bei der dargestellten Ausführungsform unter einem rechten Winkel zueinander verlaufen. Als Dichtung kann beispielsweise eine Aufsteckdichtung 130 sein, die auf den freien Endbereich, z.B. der Profilabschnitte 57.1, 57.2, aufgesteckt werden kann. Wenn dann ein weiteres Profil in Anlage an das bisher noch freie Ende der Aufsteckdichtung 130 gebracht wird, wird eine staub- und feuchtigkeitsdichte Abschottung der angereihten Rahmenprofile geschaffen, so dass wiederum eine Montageebene M5 am Profilabschnitt 51 im Dichtbereich des Rahmengestells liegt. Eine weitere Montageebene M5' ist am Profilabschnitt 53 definiert. Die Profilteile P1, P2 umschließen einen Hohlraum 59 mit im Wesentlichen rechteckigem oder quadratischem Querschnitt, der als Funktionshohlraum genutzt werden kann, wie es in der gleichzeitig angemeldeten Patentanmeldung DE 10 2014 101 402.2 beschrieben ist.

Fig. 13 zeigt ein Montagebeispiel bei zwei Rahmenprofilen 50, 50' gemäß Fig. 12. Am Profilabschnitt 51 ist ein Montage-Chassis 140 vom Innenbereich des Rahmengestells her angebaut, am Profilabschnitt 53' des Rahmengestells 50 ein Montage-Chassis 141 von außen. Damit ergeben sich, wie in der Fig. 13 bezeichnet, vier Montageebenen, nämlich die außen liegenden Ebenen 1 und 2, die sich aber immer noch im Dichtbereich des Rahmengestells befinden, sowie die weiter innen liegenden Ebenen 3 und 4.

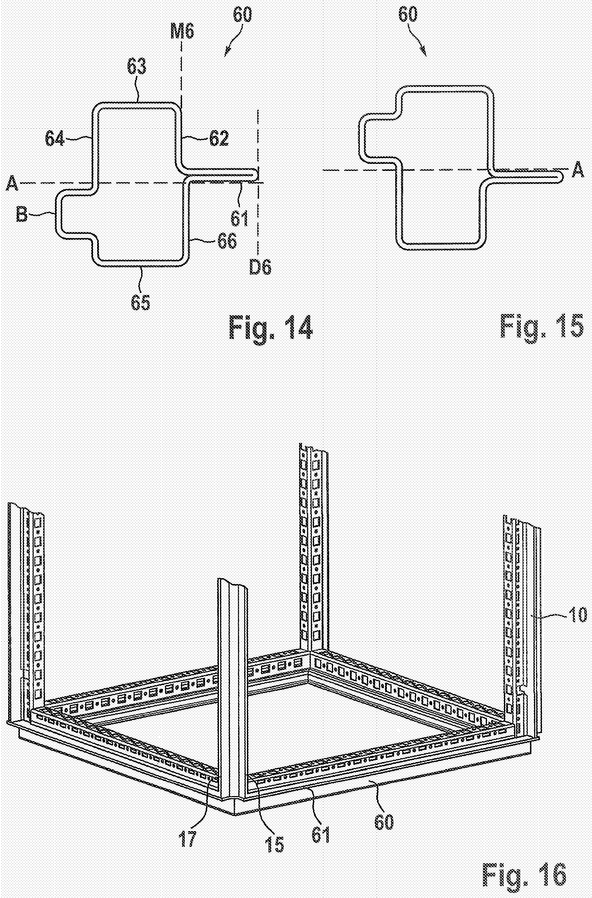

Die Fig. 14 und 15 zeigen die Querschnittsansicht eines Rahmenprofils 60, das als Horizontalprofil verbaut wird. Die Profilgeometrien der Fig. 14 und 15 sind identisch und unterscheiden sich lediglich durch die Baulage, wobei das Horizontalprofil in der Lage der Fig. 14 im Bodenbereich eines Rahmengestells verbaut wird, das Rahmenprofil der Fig. 15 im Deckenbereich. Um das Horizontalprofil 60 in der jeweiligen anderen Baulage zu verwenden, muss es lediglich um die Achse A um 180° gedreht werden.

Bei den Horizontalprofilen 60 ist, wie in der Fig. 14 zu erkennen ist, ein auf sich zurückgefalteter Profilabschnitt 61 gebildet, dessen freier Endbereich eine Dichtebene D6 definiert. Ein sich unter einem rechten Winkel anschließender Profilabschnitt 62 definiert eine Montageebene M6, die zur Dichtebene D6 parallel verläuft und sich wieder im Dichtbereich des Rahmengestells befindet. Senkrecht zum Profilabschnitt 62 schließt sich ein Profilabschnitt 63 an, wiederum senkrecht dazu ein Profilabschnitt 64, der eine Ausbuchtung B aufweist, dessen Funktion in der gleichzeitig eingereichten Patentanmeldung ... (anwaltliche Akte: R41136) beschrieben ist. Das Rahmenprofil 60 wird durch einen Profilabschnitt 65 ergänzt, der parallel zu dem Profilabschnitt 63 verläuft und auf dem das Horizontalprofil 60 bei seiner Verwendung im Bodenbereich eines Rahmengestells aufliegt. Das Profil wird durch einen senkrecht dazu verlaufenden Profilabschnitt 66 geschlossen, der in den Profilabschnitt 61 übergeht. An den Profilabschnitten 62, 63, 64 sind Befestigungsaufnahmen in Form von Systemlochungen vorgesehen, die in Fig. 16 dargestellt sind.

Fig. 16 zeigt eine perspektivische Teilansicht eines Rahmengestells, dessen Bodenbereich aus Horizontalprofilen gemäß Fig. 12 aufgebaut ist, während als Vertikalprofile solche nach Fig. 1 verwendet sind. Dabei wird deutlich, dass die Dichtebenen der vertikalen Rahmenprofile 10, definiert durch die Profilabschnitte 15,17, und der horizontalen Rahmenprofile 60, die zwei benachbarte vertikale Rahmenprofile 10 verbinden, definiert durch den Profilabschnitt 61, übereinstimmen, ebenso wie die Montageebenen, so dass sich auf vier Seiten des Rahmengestells ein umlaufender Montagerahmen ergibt, der von außerhalb des Rahmengestells her zugänglich ist. Ein solcher Montagerahmen kann beispielsweise genutzt werden, um eine Montageplatte von außen her an dem Rahmengestell anzubringen. Gleichermaßen ist es denkbar, das im Regelfall leichtere Rahmengestell auf die fertig bestückte Montageplatte zu verfahren, was ebenfalls die Montage erheblich erleichtert. Dabei kann die Montageplatte direkt mit den Befestigungsaufnahmen der Montageebenen verschraubt werden, beispielsweise mit den Montageebenen der Horizontalprofile 60 im Boden- und Deckenbereich, nur mit den Befestigungsaufnahmen der Montageebenen der vertikalen Rahmenprofile 10 oder sowohl im Boden- und Deckenbereich als auch in den seitlichen Bereichen.

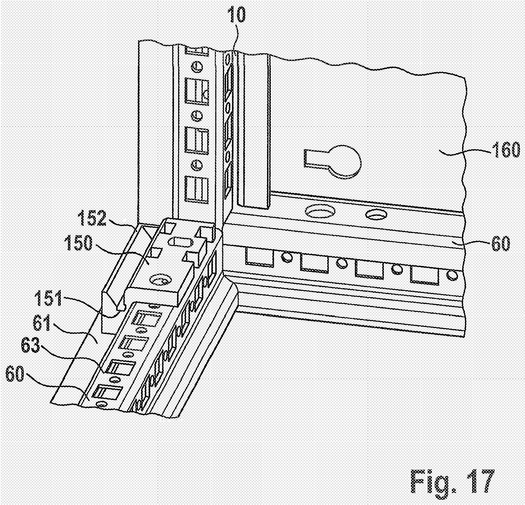

Es können aber auch Montagehilfen verwendet werden, wie sie im Zusammenhang mit den Fig. 17 bis 19 beschrieben sind.

Fig. 17 zeigt einen Eckbereich eines Rahmengestells, das aus Horizontalprofilen 60 und vertikalen Rahmenprofilen 10 aufgebaut ist. Nahe dem vertikalen Rahmenprofil 10 ist ein unteres Haltestück 150 erkennbar, das auf dem Profilabschnitt 63 aufgesetzt ist und das auf dem Profilabschnitt 61 aufliegt. Im unteren Haltestück 150 ist eine Nut 151 ausgebildet, die über eine Einfuhrschräge 152 zugänglich ist.

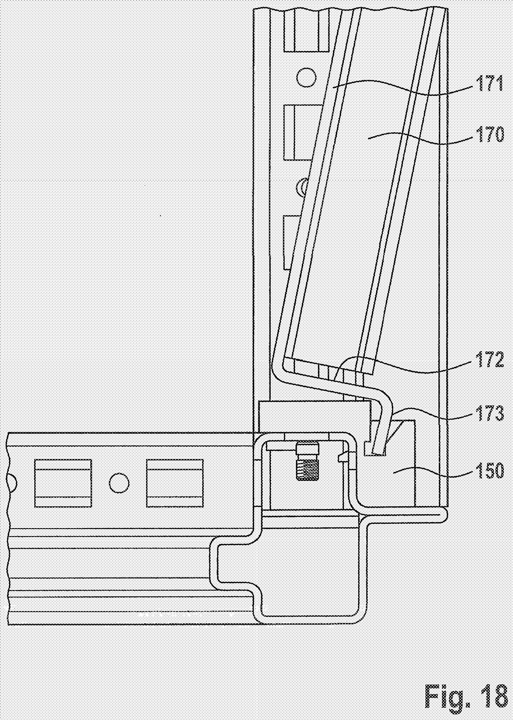

Fig. 18 zeigt, wie eine Montageplatte 170 mit Hilfe des unteren Haltestückes 150 in die Montageebene des Rahmengestells gebracht wird. Üblicherweise ist eine Montageplatte 170 zumindest an zwei gegenüberliegenden Seiten mit einer Abkantung 171 versehen, um ihre Stabilität zu erhöhen. Die Montageplatte 170 gemäß Fig. 18 weist darüber hinaus eine von dieser Umkantung 171 abgehende Abkantung 172 auf, die zum Eingriff in die Nut 151 des unteren Halteelementes 150 ausgelegt ist. In Fig. 16 ist deutlich zu erkennen, dass eine schräg gestellte Montageplatte 170 über die Einführschräge 152 des unteren Halteelementes 150 leicht in die Einstecknut 151 eingeführt werden kann. Ein weiteres unteres Haltestück 150 ist im gegenüberliegenden Eckbereich des Rahmengestells vorgesehen, so dass die Montageplatte 170 an beiden Seiten jeweils nahe eines vertikalen Rahmenprofils 110 sicher geführt wird. Die Montageplatte 170 kann dann vertikal aufgestellt werden.

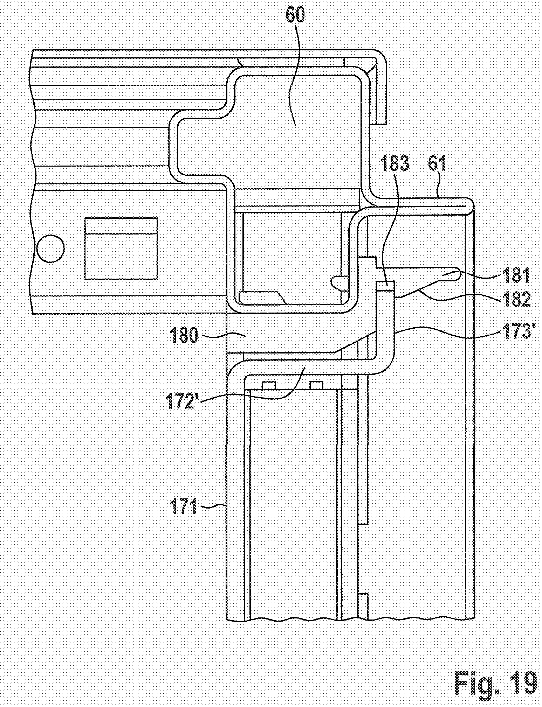

Diese Endposition ist in Fig. 19 dargestellt, die einen Eckbereich eines Rahmengestells in dessen Deckenbereich veranschaulicht, wobei als Horizontalprofile wiederum solche nach Fig. 14 verwendet werden, allerdings in der Position, die in Fig. 15 gezeigt ist. Auch hier ist die Montageplatte 170 anschließend an die Abkantung 171' mit einer Umkantung 172' versehen. Am Horizontalprofil 60 ist ein Federclip 180 angebracht, dessen Rastnase 181 im Bewegungsweg der Montageplatte 170 beim Aufstellen in die vertikale Position liegt. Das freie Ende der Umkantung 172' wird dann an der Anlaufschräge 182 der Rastnase 181 entlanggeführt, bis die Rastnase 181 über das freie Ende der Umkantung 172' schnappt und dieses in einer Nut der Rastnase gehalten wird. Durch das untere Haltestück 150 (bzw. die unteren Haltestücke) und den Federclip 180 (bzw. entsprechend die Federclips) wird die Montageplatte 170 vorfixiert und kann nun endgültig verschraubt werden.

Zurück zu Fig. 17 soll noch ergänzt werden, dass dort ein Blech 160 in einer weiteren Montageebene verschraubt ist, das zur Trennung von Rahmengestellen bzw. deren Innenbereichen in einer Anreihsituation dient.

## Patentansprüche

1. Rahmenprofil eines Rahmengestells für einen Schalt- oder Verteilerschrank, das ein Vertikal-und/oder Horizontalprofil des Rahmengestells bildet, bestehend aus einer Vielzahl von Profilabschnitten (11,12. 13, 14, 15, 16, 17), die ineinander übergehen, um ein geschlossenes Hohlprofil zu bilden, mit den weiteren Merkmalen:
- zwei erste Profilabschnitte (11, 14) weisen eine Anzahl von Befestigungsaufnahmen (11 ', 14') auf, wobei jeweils eine erste Oberfläche der Profilabschnitte (11, 14) eine äußere Montageebene (M1, M1') festlegt;
- durch zwei zweite Profilabschnitte (15, 17;) sind zwei Dichtebenen (D1, D1) zur Abdichtung des Innenbereichs des Rahmengestells definiert;
- zwei dritte Profilabschnitte (12,13) weisen eine Anzahl von Befestigungsaufnahmen (12',13') auf, die zum Innenbereich des Rahmengestells weisen;
- die äuBeren Montageebenen (M1, M1') sind von der Dichtebene (D1, D1') zum Innenbereich des Rahmengestells hin versetzt; und
- die Befestigungsaufnahmen (11', 14') der ersten Profilabschnitte (11, 14) weisen vom Innenbereich des Rahmengestells weg,
wobei die zwei ersten Profilabschnitte (11, 14) und zwei dritte Profilabschnitte (12, 13) einen Hohlkammerabschnitt mit quadratischem Querschnitt umschließen und die zwei ersten Profilabschnitte (11, 14) in die beiden zweiten Profilabschnitte (15, 17), die senkrecht zu den ersten Profilabschnitten (11, 14) verlaufen, übergehen, und wobei die beiden zweiten Profilabschnitte (15, 17) über einen vierten Profilabsehnitt (16) miteinander verbunden sind,
**dadurch gekennzeichnet, dass** die beiden zweiten Profilabschnitte (15, 17) jeweils über eine Faltung auf sich zurückgefaltet sind, sodass durch einen freien Endbereich der zweiten Profilabschnitte (15, 17) die Dichtebene (D1, D1') senkrecht zu der Faltung des zweiten Profilabschnitts (15, 17) definiert ist.

2. Rahmenprofil nach Anspruch 1, **dadurch gekennzeichnet, dass** die zweiten Profilabschnitte (15, 17) von den ersten Profilabschnitten (11, 14) unterschiedlich sind.

3. Rahmenprofil nach Anspruch 1, **dadurch gekennzeichnet, dass** die äußeren Montageebenen (M1, M1') parallel zu den Dichtebenen (D1, D1') verlaufen.

4. Rahmenprofil nach Anspruch 1, **dadurch gekennzeichnet, dass** die dritten Profilabschnitte (12, 13) eine Anzahl von Befestigungsaufnahmen (12', 13') aufweisen, die zum Innenbereich des Rahmengestells weisen, wobei durch eine Oberfläche der dritten Profilabschnitte (12, 13) eine erste innere Montageebene definiert ist

5. Rahmenprofil nach Anspruch 4, **dadurch gekennzeichnet, dass** die ersten inneren Montageebenen parallel zur jeweiligen äußeren Montageebene (M1, M1') verlaufen.

6. Montageplatte zur Verwendung mit wenigstens einem Rahmenprofil nach einem der Ansprüche 1 bis 5, mit einer im Wesentlichen rechteckigen Grundplatte (171), bei der an wenigstens einer ihrer Seiten eine Abkantung (172, 172') vorgesehen ist, die sich in einer parallel zur Grundplatte verlaufenden Umkantung (173, 173') zur Anlage an einer der äußeren Montageebenen (M1, M1') fortsetzt.

## Claims

1. A frame profile of a rack for a switch or distributor cabinet, which forms a vertical and/or a horizontal profile of the rack, comprising a plurality of profile sections (11, 12, 13, 14, 15, 16, 17), which merge into each other, in order to form a closed hollow profile, with the following features:
- two first profile sections (11, 14) have a number of attachment openings (11', 14'), wherein each first surface of the profile section (11, 14) determines an exterior assembly plane (M1, M1');
- two sealing planes (D1, D1;) for sealing of the inner area of the rack are defined by two second profile sections (15, 17;);
- two third profile section (12, 13) comprise a number of attachment openings (12', 13') which point towards the inner area of the rack;
- the outer assembly planes (M1, M1;') are displaced from the sealing plane (D1, D1') to the inner area of the rack; and
- the attachment openings (11', 14') of the first profile section (11, 14;) point away from the inner area of the rack,
wherein the two first profile sections (11, 14) and two third profile sections (12, 13) enclose a hollow chamber section with a square cross section and the two first profile sections (11, 14) make transitions into the two second profile sections (15, 17), which run perpendicular to the first profile sections (11, 14), and wherein the two second profile sections (15, 17) are connected with each other via a fourth profile section (16),
**characterized in that** the two second profile sections (15, 17;) each double back on themselves via a bend, so that the sealing plane (D1, D1') is defined perpendicular to the bending of the second profile section (15, 17) by a free end area of the second profile section (15, 17).

2. The frame profile according to claim 1, **characterized in that** the second profile sections (15, 17) are different from the first profile sections (11, 14).

3. The frame profile according to claim 1, **characterized in that** the outer assembly planes (M1, M1') run parallel to the sealing planes (D1, D1').

4. The frame profile according to claim 1, **characterized in that** the third profile sections (12, 13) have a number of attachment openings (12', 13'), which point to the inner area of the rack, wherein a first inner assembly plane is defined by a surface of the third profile section (12, 13).

5. The frame profile according to claim 4, **characterized in that** the first inner assembly planes run parallel to the particular outer assembly plane (M1, M1').

6. A mounting plate for use with at least one frame profile according to one of claims 1 to 5, with an essentially rectangular base plate (171), which is provided with an edging (172, 172') at at least one of its sides, which continues in a doubling back (173, 173') that runs parallel to the base plate for fitting to r the outer assembly plane (M1, M1').

## Revendications

1. Profilé de cadre d'un châssis pour une armoire de commande ou de distribution, qui constitue un profilé vertical et/ou horizontal du châssis, constitué d'une pluralité de portions de profilé (11, 12, 13, 14, 15, 16, 17) qui se fondent afin de former un profilé creux fermé, avec les caractéristiques supplémentaires suivantes :
- deux premières portions de profilé (11, 14) comprennent un nombre de logements de fixation (11', 14'), une première surface des portions de profilé (11, 14) définissant respectivement un plan de montage externe (M1, M1') ;
- deux plans d'étanchéité (D1, D2) pour l'étanchéification de la partie interne du châssis étant définis par deux deuxièmes portions de profilé (15, 17);
- deux troisièmes portions de profilé (12, 13) comprennent un nombre de logements de fixation (12', 13') qui sont orientés vers la partie interne du châssis;
- les plans de montage externes (M1, M1') sont décalés du plan d'étanchéité (D1, D1') par rapport à la partie interne du châssis ; et
- les logements de fixation (11', 14') des premières portions de profilé (11, 14) sont orientés du côté opposé à la partie interne du châssis,
les deux premières portions de profilé (11, 14) et les deux troisièmes portions de profilés (12, 13) entourant une portion de chambre creuse avec une section transversale carrée et les deux premières portions de profilé (11, 14) se fondant dans les deux deuxièmes portions de profilé (15, 17), qui s'étendent perpendiculairement aux premières portions de profilé (11, 14) et les deux deuxièmes portions de profilé (15, 17) étant reliées entre elles par l'intermédiaire d'une quatrième portion de profilé (16),
**caractérisé en ce que** les deux deuxièmes portions de profilé (15, 17) sont repliées chacune par un pliage, de façon à ce qu'une partie d'extrémité libre des deuxièmes portions de profilé (15, 17) définisse le plan d'étanchéité (D1, D1') perpendiculairement au pliage de la deuxième portion de profilé (15, 17).

2. Profilé de cadre selon la revendication 1, **caractérisé en ce que** les deuxièmes portions de profilé (15, 17) sont différentes des premières portions de profilé (11, 14).

3. Profilé de cadre selon la revendication 1, **caractérisé en ce que** les plans de montage externes (M1, M1') s'étendent parallèlement aux plans d'étanchéité (D1, D1').

4. Profilé de cadre selon la revendication 1, **caractérisé en ce que** les troisièmes portions de profilé (12, 13) comprennent un nombre de logements de fixation (12', 13') qui sont orientés vers la partie interne du châssis, une surface des troisièmes portions de profilé (12, 13) définissant un premier plan de montage interne.

5. Profilé de cadre selon la revendication 4, **caractérisé en ce que** les premiers plans de montage internes s'étendent parallèlement aux plans de montage externes (M1, M1') respectifs.

6. Plaque de montage destinée à être utilisée avec au moins un profilé de cadre selon l'une des revendications 1 à 5,
avec une plaque de base (171) globalement rectangulaire, dans laquelle, sur au moins un de ses côtés, est prévu un rebord (172, 172') qui se prolonge par un rebord (173, 173') s'étendant parallèlement à la plaque de base pour un appui contre un des plans de montage externes (M1, M1').
